# EUROPEAN PATENT APPLICATION

(11) **EP 3 483 226 A1**
(43) Date of publication of application: **15.05.2019**
(21) Application number: 17764670.0
(22) Date of filing: 10.07.2017
(51) Int. Cl.: C09D 163/00, C09D 175/06, C08L 63/00, C08L 75/06

(54) **THERMOSETTING POWDER PAINT WITH ANTI-STICKER PROPERTIES, CORRESPONDING PRODUCTION AND USE METHODS AND CORRESPONDING COATING**

(30) Priority: 08.07.2016 PT 2016109520
(71) Applicant: Cin Industrial Coatings, S.A., MAIA 4474-009 (QA)
(72) Inventor: ALMEIDA MOREIRA LOPES, José Carlos, 4450-296 Matosinhosc (PT); CARVALHO RODRIGUES TEOTÓNIO, Salomé, 4470-584 Maia (PT); BROCHADO PINTO GONÇALVES AZEVEDO, Mário João, 4450-256 Matosinhos (PT)
(74) Representative: Pelayo de Sousa Henriques, Rui
(86) International application number: PCT/PT2017/050018
(87) International publication number: WO 2018/009086

(57) **Abstract**

Thermosetting powder paint containing solid resin, hardener, texturing agent, additives, fillers, and optionally pigments, characterised in that the texturing agent (in an amount between 1 and 20 wt. % having a melting point between 160 and 260°C and an average particle size (d₅₀) between 30 and 300 µm) is a micronized polyamide wax or a pre-micronized ABS. The nature of the resin (10 - 90 wt. %) is, in particular, amorphous polyester with an OH functionality, and the hardener is a non-blocked polyisocyanate uretdione or blocked polyisocyanate e-caprolactam hardener, or an amorphous polyester hardener having a COOH function, whilst the hardener is a β-hydroxylalkylamide (CAS 6334-25-4), TGIC (triglycidyl isocyanurate - CAS 2451-62-9), multifunctional glycidyl ester (CAS 7195- 44-0/CAS 7237-83-4), or acrylic GMA (Glycidyl meta-acrylate) hardener.

The invention further concerns methods for production and application of the powder paint and the corresponding coating having a dry thickness between 30 and 150 µm.

## Description

### Technical Field

This invention concerns a thermosetting powder paint that, once applied, has non-stick properties. In one preferred embodiment, the invention concerns a thermosetting powder paint that, once applied, combines non-stick and anti-graffiti properties. Additionally, the invention concerns methods for production and application of the paint and the coating obtained thereby.

### Prior Art

Powder paints generally are known as environmentally friendly, and, due to their characteristics, allow for effective use as a coating of nearly 100% of the material applied; they are free of solvents and practically free of volatile organics (VOs), which has direct benefits both for persons and the environment. In this context, the use of paints of this type allows for a smaller environmental footprint compared to solvent-based and even aqueous liquid paints.

The major urban centres face the constant adulteration of the appearance and function of public infrastructure intended for use by the general public. The constant, indiscriminate posting of placards and stickers causes visual pollution and functional impairments that are harmful to all.

Such infrastructure includes urban furniture, sound barriers, bus stops, tube stations, traffic signals, advertising hoardings, street lighting, etc.

Powder paints may be used on equipment of this type with two basic purposes: Decoration and protection of the substrate. There may be an additional function when coatings are used on this urban infrastructure that allows for easy removal of graffiti; coatings of this kind are commonly referred to as 'anti-graffiti paint'.

Coatings containing anti-graffiti paint are characterised generally by very smooth and compact external surfaces, thus facilitating the removal of any graffiti that may be applied to them, which normally must be carried out by means of aggressive solvent-based detergents.

The issue of smooth surfaces, especially those obtained with conventional anti-graffiti paint coatings, is that they are especially suited for effective posting of placards and the like.

Thus, there is a need for paints, in particular powder paints, that allow the scourge of fly-posting to be minimised, and preferably powder paints with which the outer surfaces of the corresponding coatings combine anti-graffiti properties with anti-sticker properties.

### Objectives of the Invention

The principal objective of this invention is to provide a powder paint having properties that impede fly-posting on the coatings produced with it. 'Anti-sticker properties' refers here to the property of rendering fly-posting impossible, or at the least of significantly reducing the adhesion time of fly-posted matter to the coatings made using the paint, and of facilitating their removal. An additional objective of the invention is a powder having the additional functionality of facilitating removal of graffiti, repeatedly if necessary.

Such paint is intended for the urban furniture market, and may also be used on equipment for other purposes.

The coating resulting from the application of paint according to the invention causes any fly-posted matter, within a shortened period of time, to fall to the ground or facilitates their removal by cleaners, thus disincentivising fly-posting.

### Description of the Invention

This invention concerns a thermosetting powder paint that provides coatings with a textured appearance and anti-sticker properties, specially formulated to minimise the adhesion of placards and stickers. 'Textured appearance' refers to a rough surface that is rough to the touch.

The formulation on which these coatings are based comprises entirely solid components, i.e., resins or resin mixtures, a hardening agent or mixture thereof, fillers, texturing agents, and various additives, in particular surface tension regulators and viscosity regulators. It may also comprise pigments.

Given the function of the respective surface, these coatings are solely intended for use as a finishing product in a single- or multilayer system.

According to the invention, the anti-sticker property may be provided to powder paints consisting of the following resins and hardening agents: (a) saturated crosslinked carboxylated polyester resin - with a hardener of the following type: (i) hydroxyalkylamide (HAA), (ii) multifunctional glycidyl ester (Araldite® PT910 or PT912, from Huntsman L.L.C.), (iii) triglycidyl isocyanurate (TGIC), or (iv) acrylic hardener (GMA) - (b) hydroxylated polyester resin with an isocyanate hardener, or (c) hybrid epoxy/polyester resin or only epoxy, in the latter two cases (i.e., (c)) for inside use. Epoxy (or modified epoxy) resins in the latter case may be based on the reaction product of bisphenol-A epichlorohydrin with different molecular weights (from type 1 - type 7), and may also be based on bisphenol-F or novolac epoxy. Epoxy powder paints are crosslinked by dicyanodiamide (with or without catalysts), o-tolylbiguanide, anhydride, phenol, or matting hardeners resulting from the combination of phenylimidazoline and pyromethylic acid or cyanuric acid. These types of resins and hardeners may also be found in hybrid epoxy/polyester systems.

According to the invention, the thermosetting powder paint contains the following:
a) solid resin
b) hardener
c) texturing agent
d) additives
e) fillers and, optionally, pigments
   and is characterised in that the texturing agent is a micronized polyamide wax having a melting point between 160 and 260°C and an average particle size (d₅₀) between 30 and 300 µm, or is pre-micronized Acrylonitrile-Butadiene-Styrene (ABS) having an identical particle size and a melting point between 160 and 260°C, in both cases in an amount of 1 - 20 wt. % of the formulation.

According to one preferred embodiment of the invention, the resin consists of one or more amorphous saturated polyester resins having OH functionalities. In this case, the hardener is a non-blocked uretdione polyisocyanate, or a blocked e-caprolactam isocyanate.

According to another preferred embodiment of the invention, the resin consists of one or more amorphous saturated polyester resins having COOH functionalities. In this case, the hardener is a β-hydroxylalkylamide (CAS 6334-25-4), TGIC (triglycidyl isocyanurate - CAS 2451-62-9), a multifunctional glycidyl ester (CAS 7195-44-0/CAS 7237-83-4), or a GMA acrylic (Glycidyl metaacrylate or a mixture thereof.

According to yet another preferred embodiment of the invention, the resin consists of one or more epoxy resins or combined amorphous saturated polyester resins having COOH functionalities.

According to the invention, the resin(s) of the above embodiments are preferably present in an amount of 10 - 90 wt. % in the formulation.

### Description of Embodiments

The specific texture of the coatings according to the invention results from the addition (during the process of producing the paint) of the aforementioned materials, in particular the texturing agent, in the following production steps: During the weighing of the components for pre-mixing or by addition after milling; in the latter case, a dry blend or an intrinsic mixture (bonding). The 'pre-mixing step' refers to the mixing step prior to the extrusion process.

More specifically, the production method according to the invention includes weighing the components, including the texturing agent, and addition to a tank, followed by pre-mixing in an industrial mixer. At the end of this step, the mixture is fed into an extruder with optimised extrusion steps, and lastly, milled in a mill to provide a specific granulometric distribution, in particular using cyclones and classifiers. Alternatively, the dry-blend or bonding process may be used to add the texturing agent at the very end, following the milling process. In the case of bonding, the non-crosslinked powder paint is heated in a mixture by agitation to a point at which the powder paint is sufficiently sensitive that, by adding one or more new components, these components may be bonded to the powder paint particles without inducing a polymerisation reaction.

In terms of the application method of the paint, in order to obtain the desired function, the aforementioned powder paint is applied electrostatically (or, alternatively, applied via a fluidised bed or with a triboelectric gun), and is deposited on a - traditionally metal - part that is conveniently earthed. The thickness applied may vary between 30 and 150 µm. To complete the process, the powder paint is thermally polymerised in a suitable conventional oven, which may or not include infrared or ultraviolet radiation in its curing process. The curing temperature for the powder paint according to the invention is between 120 and 240°C.

In the specific case of the urban furniture market, a powder ink having the aforementioned characteristics, preferably when it is based on polyurethane systems, may include an additional function that, on the one hand, prevents the adhesion of stickers, and, on the other, facilitates the removal of graffiti paint upon the application of the appropriate cleaning method. These paints are weather-resistant, and may be used in equipment for outdoor use such as urban furniture. The powder paint is obtained using a hydroxylated polyester resin or combination thereof having a hydroxyl number (OH) between 60 and 290 mg KOH/g, crosslinked with non-blocked uretdione polyisocyanates having an NCO content of 11 - 17%. The powder paint further consists of other additives, such as benzoin, polyacrylates, antioxidants, and surfactants. Organic or non-organic powders may also be added in order to colour the product. Known catalysts for polyurethane chemistry may optionally be present. The texture is obtained by adding micronized polyamide wax having a melting point between 160 and 240°C and an average particle size (d₅₀) between 30 and 300 µm. Another alternative in order to obtain the specific texture is to add micronized ABS having an average particle size (d₅₀) between 30 and 300 µm. It must be introduced into the formulation during the pre-mixing phase, or, alternatively, after the micronisation of the base powder paint. This powder paint is thermally crosslinked between 180 and 200°C after being applied to a metal substrate, and may also be applied in a multilayer system as a finish. As noted, the polyurethane powder paint allows for the anti-sticker property to be combined with easy graffiti removal. In the traditional methods, the reduction of the anchoring points in itself adversely influences the anti-graffiti properties. In this invention, a double functionality was surprisingly obtained, preserving the anti-sticker properties whilst obtaining good anti-graffiti properties. The anti-graffiti properties were evaluated using the methodology described in standard ASTM D6578, which includes the application of different types of graffiti, cleaning with suitable solvents, repeating application and cleaning over several cycles. The anti-sticker and anti-graffiti properties were also tested after 2000 hours of accelerated aging using equipment with UV-A radiation cycles (ISO 11501).

### Examples

This invention was tested in applications of the product in a cylindrical tube and a flat plate, placed in a vertical position. The tests were carried out in a laboratory with different tapes and the like that are available on the market, in accordance with the following procedure:
Painting method: First coat: MEGAPOL® 2000 S590, from CIN Industrial Coatings, S.A., (colour: RAL 7024-GL), and polyurethane varnish finish (powder paint according to the invention);
Substrate for application: 60 mm diameter tube and A5-size flat plate;
Average thicknesses applied:

**[Table 1]**

| | **First coat [µm]** | **Finish [µm]** |
|---|---|---|
| Tube | 63 | 53 |
| Plate | 64 | 70 |

Trial temperature: 23°C;
Relative humidity: 60-70%;
Duration of Trial: 24 h;
Number of stickers applied per trial: 8 20 x 40 mm stickers;
Pressurisation time for sticker fixation: 30 s;
Force used in applying the stickers: 15 N.

The types of tape and other adhesive materials analysed are summarised in the following table:

**[Table 2]**

| **Type** | **Manufacturer** | **Adhesion to steel** | **Elongation at break** | **Tensile strength** |
|---|---|---|---|---|
| 1100 clear | IPG | 50.3 N/100 mm | 150% | 560 N/100 mm |
| Tartan 369 | 3M | 32 N/100 mm | 160% | 666 N/100 mm |
| Tesa 4579 | Tesa | 80 N/100 mm | 10% | 2,300 N/100 mm |
| Scotch 3444 | 3M | 24 N/100 mm | (7-10)% | 350 N/100 mm |
| Paper sticker (acrylic stick) | | Not disclosed by manufacturer | Not disclosed by manufacturer | Not disclosed by manufacturer |

Results obtained from tests

**[Table 3]**

| **Type** | **Number of stickers fully or partially adhering after 24 h trial** | | **Area of adhesion after 24 h** | **Force necessary to remove stickers*** |
|---|---|---|---|---|
| | Tube | Plate | | |
| 1100 clear | 0 | 0 | | |
| Tartan 369 | 0 | 0 | | |
| Tesa 4579 | 4 | 0 | Less than 10% | Less than 0.5 N |
| Scotch 3444 | 2 | 0 | Less than 10% | Less than 0.5 N |
| Paper sticker (acrylic stick) | 0 | 0 | | |

| | | | | |
|---|---|---|---|---|
| * using a Kem 285-052 dynamometer. | | | | |

Thus, it was found, for example, that, when 8 strips of Scotch 3444 tape were applied at an ambient temperature of 23°C at sea level with a force of 15 N on a flat vertical surface, they will fall by the action of gravity within less than 24 h.

The specific paint formulation used in the test was as follows, by weight percent:
Polyester resin (OH functionality) - 38.2%
Non-blocked polyisocyanate uretdione hardener - 45.0%
Surface tension regulation additive - 1.0%
Viscosity regulator (benzoin) - 0.6%
Texturing agent (polyamide) - 15.0%
Free-flow agent - 0.2%

Another specific case of powder paint with anti-sticker properties according to the invention concerns a paint consisting of one or more carboxylated polyester resins with an acid number (AV) between 20 and 90 mg KOH/g, thermally crosslinked with a β-hydroxylalkylamide hardener, and further consisting of other additives such as benzoin, polyacrylates, antioxidants, and surfactants. Organic or non-organic powders may also be added in order to colour the product. The texture is obtained by adding micronized polyamide wax having a melting point between 160 and 260°C and an average particle size (d₅₀) between 30 and 300 µm. This coating is also weather-resistant, and can be placed on outdoor equipment.

A specific formulation of powder paint in this specific case is as follows, by weight percent: Polyester resin (COOH functionality) - 81.0%
β-Hydroxyalkylamide hardener - 6.1%
Surface tension regulation additive - 1.1%
Viscosity regulator (benzoin) - 0.7%
Polyamide texturing agent - 10.0%
Carbon black pigment - 0.9%
Free-flow agent - 0.2%

A third specific case in which a specific texture is obtained for anti-stick functionality is a paint obtained by adding micronized ABS with an average particle size (d₅₀) between 30 and 300 µm and a melting point between 160 and 260°C. For best results, it is recommended to add this compound to the base powder paint after micronization by external mixing.

## Claims

1. Thermosetting powder paint, having the following composition:
a) solid resin
b) hardener
c) texturing agent
d) additives
e) fillers and, optionally, pigments
**characterised in that** the texturing agent is a micronized polyamide wax having a melting point between 160 and 260°C and an average particle size (d₅₀) between 30 and 300 µm, or is pre-micronized Acrylonitrile-Butadiene-Styrene (ABS) having an identical particle size and a melting point between 160 and 260°C, in both cases in an amount of 1 - 20 wt. % of the formulation.

2. Powder paint according to claim 1, **characterised in that** it contains one or more amorphous polyester resins with OH functionalities in an amount of 10 - 90 wt. % of the formulation.

3. Powder paint according to claim 1, **characterised in that** it contains one or more amorphous polyester resins with COOH functionalities in an amount of 10 - 90 wt. % of the formulation.

4. Powder paint according to claim 1, **characterised in that** it contains one or more epoxy resins based on the reaction product of bisphenol-A and epichlorohydrin having different molecular weights, from type 1 to type 7, based on bisphenol-F or novolac epoxy, or a combination of epoxy and amorphous polyester with a COOH functionality, in an amount that may vary between 10 and 90% by weight of the formulation.

5. Powder paint according to claim 2, **characterised in that** it contains a non-blocked uretdione polyisocyanate or blocked e-caprolactam polyisocyanate hardener.

6. Powder paint according to claim 3, **characterised in that** it contains a β-hydroxylalkylamide (CAS 6334-25-4), TGIC (triglycidyl isocyanurate - CAS 2451-62-9), multifunctional glycidyl ester (CAS 7195- 44-0/CAS 7237-83-4), or GMA (Glycidyl metaacrylate) hardener.

7. Powder paint according to claim 6, **characterised in that** it contains a hardener that is a mixture of two or more of the components set forth in claim 6.

8. Powder paint according to claim 4, **characterised in that** it contains a dicyanodiamide (with or without catalyst), o-tolylbiguanide, anhydride, phenol hardener, or a matting hardener resulting from the combination of phenylimidazoline with pyromethylic acid or cyanuric acid.

9. Powder paint according to claim 1, **characterised in that** it contains performance additives with various functions, such as benzoin, silica-adsorbed polyacrylates, phenol or phosphate antioxidants, aluminium- or nanosilica-based dispersants.

10. Powder paint according to claim 1, **characterised in that** it includes organic and/or inorganic pigments or combinations thereof.

11. Powder paint according to claim 1, **characterised in that** it includes inorganic fillers or combinations thereof, such as calcium carbonate and barium sulphate.

12. Coating with paint according to any of the foregoing claims, **characterised in that** it has dry thicknesses ranging between 30 and 150 µm.

13. Coating according to claim 12, **characterised in that** it is a finish.

14. Coating according to claim 13, **characterised in that** it is a transparent or pigmented finish.

15. Coating according to claim 13, **characterised in that** it is a glossy or matte finish.

16. Coating according to claim 12, **characterised in that** it is a rough (textured) finish.

17. Method for painting with paint according to any of claims 1 - 11, **characterised by** the electrostatic, triboelectric, or fluidised-bed application of the paint to a properly earthed substrate, followed by thermal polymerisation at temperatures between 140 and 200°C.

18. Method for producing a paint according to any of claims 1- 11, **characterised in that** it includes the steps of weighing, pre-mixing, extrusion, and micronization.

19. Method according to claim 18, **characterised in that** the micronization includes all elements together.

20. Method according to claim 18, **characterised in that** it includes a final step of dry mixing the texturing agent.

21. Method according to claim 18, **characterised in that** it includes a final process of bonding the texturing agent.
